# EUROPÄISCHE PATENTANMELDUNG

(11) **EP 4 209 390 A1**
(43) Veröffentlichungstag der Anmeldung: **12.07.2023**
(21) Anmeldenummer: 23150107.3
(22) Anmeldetag: 03.01.2023
(51) Int. Cl.: B60N 3/06, B62D 33/06, B60R 7/04

(54) **FAHRERHAUS FÜR LASTKRAFTWAGEN**

(30) Priorität: 11.01.2022 DE 102022100459
(71) Anmelder: MAN Truck & Bus SE, 80995 München (DE)
(72) Erfinder: Schmitz, Andreas, 80995 München (DE)
(74) Vertreter: v. Bezold & Partner Patentanwälte - PartG mbB

(57) **Zusammenfassung**

Die vorliegende Erfindung betrifft u.a. ein Fahrerhaus (10) für einen Lastkraftwagen, aufweisend einen Fahrersitz (16) und einen Fahrerhausboden (12) mit einer Bodenmulde (14), die in einer Vorwärtsfahrtrichtung des Lastkraftwagens vor dem Fahrersitz (16) angeordnet ist. Das Fahrerhaus (10 weist einen Bodeneinsatz (22) auf, der in der Bodenmulde (14) angeordnet und mit dem Fahrerhausboden (12), vorzugsweise lösbar, gefügt ist, wobei der Bodeneinsatz (22) zusammen mit der Bodenmulde (14) einen Doppelboden zum Versetzen einer Fußauflagefläche für einen auf dem Fahrersitz (16) sitzenden Fahrer (F) vertikal nach oben bildet.

## Beschreibung

Die Erfindung betrifft ein Fahrerhaus für einen Lastkraftwagen. Die Erfindung betrifft ferner einen Lastkraftwagen mit einem Fahrerhaus. Die Erfindung betrifft ferner ein Verfahren zum Herstellen eines Fahrerhauses für einen Lastkraftwagen.

Lastkraftwagen-Fahrerhäuser mit doppeltem Boden zum Verbessern einer Sicht des Fahrers sind beispielsweise aus der DE 60 2004 001 392 T2 und der WO 2014/196903 A1 bekannt.

Die DE 60 2004 001 392 T2 offenbart eine Kabine mit einem Führerstand, die für ein Kraftfahrzeug bestimmt ist, umfassend einen Sitz für den Fahrer, der eine Sitzfläche und eine Rückenlehne aufweist, ein Organ zum Fahrtrichtungswechsel, ein Armaturenbrett und wenigstens ein Pedal-Betätigungsorgan. Der Fahrer weist einen Fersenpunkt auf. Wenn der Fahrer in Lenkposition auf dem Sitz sitzt und wenn sich die Kabine in der Horizontalen befindet, ist die Rückenlehne des Sitzes zum Heck der Kabine geneigt und weist einen Winkel auf, der bezogen auf die Vertikale im Wesentlichen zwischen 18° und 30° beträgt. Der Sitz weist eine Höhe in der Vertikalen auf, die bezogen auf den Fersenpunkt im Wesentlichen zwischen 300 mm und 400 mm beträgt.

Die WO 2014/196903 A1 offenbart ein LKW-Chassis, das einen oberen Teil umfasst, der eine Schnittstelle zu einem Fahrerhaus definiert, wobei eine äußere Struktur des oberen Chassisteils eine obere Begrenzungslinie aufweist, die sich teilweise um einen Raum für einen Radkasten zwischen einer hinteren Position oben auf dem Radkastenraum und einer vorderen Position vor dem Radkastenraum erstreckt.

Der Erfindung liegt die Aufgabe zu Grunde, ein verbessertes Fahrerhaus für einen Lastkraftwagen zu schaffen, mit dem vorzugsweise eine direkte Sicht des Fahrers aus dem Fahrerhaus verbessert werden kann.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Fahrerhaus für einen Lastkraftwagen. Das Fahrerhaus weist einen Fahrersitz und einen Fahrerhausboden (z. B. Fahrerhausrohbauboden) mit einer Bodenmulde, die in einer Vorwärtsfahrtrichtung des Lastkraftwagens (bzw. des Fahrerhauses) vor dem Fahrersitz angeordnet ist, auf. Das Fahrerhaus weist ferner einen Bodeneinsatz auf, der in der Bodenmulde angeordnet und mit dem Fahrerhausboden, vorzugsweise lösbar, gefügt ist. Der Bodeneinsatz bildet zusammen mit der Bodenmulde einen Doppelboden, vorzugsweise zum Versetzen einer Fußauflagefläche für einen auf dem Fahrersitz sitzenden Fahrer vertikal nach oben.

Vorteilhaft kann der Bodeneinsatz einen Fahrer des Lastkraftwagens dazu bringen, den Fahrersitz höher zu stellen, bzw. der Bodeneinsatz kann einen höheren Einbau des Fahrersitzes ermöglichen, ohne dass die Füße des auf dem Fahrersitz sitzenden Fahrers den Boden nicht erreichen. Die erhöhte Sitzposition des Fahrers kann eine verbesserte Sicht ermöglichen. Insbesondere kann die direkte Sicht des Fahrers in unmittelbarer Fahrzeugnähe vor dem Fahrerhaus, zur Beifahrerseite und zur Fahrerseite hin verbessert werden. Die Sicht kann besonders dadurch verbessert werden, dass der Fahrer durch die erhöhte Sitzposition besser über die Instrumententafel und die Türbrüstung hinwegsehen kann. Durch die mittels des Bodeneinsatzes erhöhte Sitzposition des Fahrers können beispielsweise auch derzeitige oder zukünftige gesetzliche Vorgaben zur direkten Sicht des auf dem Fahrersitz sitzenden Fahrers besser erfüllt werden. Die Verwendung des Bodeneinsatzes ermöglicht dabei, dass alle bisherigen Werkzeuge zum Fertigen des Fahrerhausrohbaus mit dem Fahrerhausboden und dessen Bodenmulde weiterverwendet werden können. Der Bodeneinsatz kann dann einfach auf dem Fahrerhausboden des Fahrerhausrohbaus bzw. in der Bodenmulde des Fahrerhausbodens angeordnet werden, um die erhöhte Sitzposition des Fahrers zu ermöglichen. Vorteilhaft kann damit die erhöhte Sitzposition des Fahrers ermöglicht werden, wobei alle anderen Komponenten außerhalb des Fahrerarbeitsplatzes von der Anordnung des Bodeneinsatzes unberührt bleiben.

Vorzugsweise kann der Fahrersitz einen integrierten Gurt aufweisen. Vorteilhaft kann der Fahrersitz damit sowohl in Fahrerhausvarianten mit dem Bodeneinsatz als auch in Fahrerhausvarianten ohne den Bodeneinsatz verwendet werden.

In einem Ausführungsbeispiel weist der Fahrerhausboden einen (zum Beispiel gegenüber der Bodenmulde) erhabenen Motortunnelabschnitt auf. Vorzugsweise kann die Bodenmulde bezüglich einer Querachse des Fahrerhauses neben dem erhabenen Motortunnelabschnitt angeordnet sein, wobei besonders bevorzugt eine Oberseite des Bodeneinsatzes und eine Oberseite des erhabenen Motortunnelabschnitts im Wesentlichen auf gleicher Höhe angeordnet sind. Vorteilhaft kann der Fahrer des Lastkraftwagens somit ebenerdig von dem Bodeneinsatz auf den Motortunnel und zurück ohne Stolpergefahr übertreten.

In einem weiteren Ausführungsbeispiel weist der Fahrerhausboden einen im Wesentlichen vertikalen Wandabschnitt, der unten in die Bodenmulde und oben in den erhabenen Motortunnelabschnitt übergeht, auf. Der Fahrerhausboden kann eine Versteifungsstruktur aufweisen, die sich geneigt zwischen dem im Wesentlichen vertikalen Wandabschnitt und der Bodenmulde erstreckt und den im Wesentlichen vertikalen Wandabschnitt zusätzlich an der Bodenmulde abstützt. Vorzugsweise kann der Bodeneinsatz zum Aufnehmen oder Abdecken der Versteifungsstruktur ausgebildet sein. Vorteilhaft kann der Bodeneinsatz damit zusätzlich zu seiner Funktion zum Erhöhen der Sitzposition die geschützte Anordnung der Versteifungsstruktur ermöglichen, die beispielsweise ohne Bodeneinsatz einen störenden Rampenabschnitt im Fußraum darstellen würde.

Vorzugweise kann der im Wesentlichen vertikale Wandabschnitt entlang einer Längsachse des Fahrerhauses bzw. des Lastkraftwagens erstrecken, z. B. im Wesentlichen parallel dazu.

In einem weiteren Ausführungsbeispiel weist der Bodeneinsatz eine Höhe auf, die ≥ 50 mm, ≥ 70 mm oder ≥ 90 mm, und/oder ≤ 150 mm, ≤ 130 mm oder ≤ 110 mm ist. Vorteilhaft kann damit eine erhöhte Sitzposition für den Fahrer ermöglicht werden, die eine besonders gute direkte Sicht aus dem Fahrerhaus in die unmittelbare Fahrzeugnähe erlaubt.

In einer Ausführungsform ist der Bodeneinsatz im Wesentlichen boxförmig, kastenförmig, (zum Beispiel umgedreht) wannenförmigen oder (zum Beispiel umgedreht) schalenförmig. Alternativ oder zusätzlich ist der Bodeneinsatz unten offen. Alternativ oder zusätzlich ist der Bodeneinsatz starr und/oder starr auf der Bodenmulde abgestützt. Alternativ oder zusätzlich ist der Bodeneinsatz derart mit dem Fahrerhausboden gefügt, dass der Bodeneinsatz den Fahrerhausboden versteift, vorzugsweise bezüglich einer Längsachse und/oder einer Querachse des Fahrerhauses.

In einer weiteren Ausführungsform ist der Bodeneinsatz nur innerhalb der Bodenmulde angeordnet. Alternativ oder zusätzlich ist der Bodeneinsatz zum Füllen der Bodenmulde in der Bodenmulde angeordnet.

In einer weiteren Ausführungsform weist der Bodeneinsatz ein (zum Beispiel quaderförmiges oder zylinderförmiges) Staufach auf. Vorteilhaft kann der Bodeneinsatz damit zusätzlich zu seiner Funktion zum Erhöhen der Sitzposition dazu genutzt werden, Gegenstände, wie beispielsweise Schuhe, Handschuhe oder andere Utensilien, geschützt und gleichzeitig leicht zugänglich zu verstauen.

In einer weiteren Ausführungsform weist der Bodeneinsatz einen, vorzugsweise oberseitigen, Deckel auf, über den das Staufach zugänglich ist.

In einer weiteren Ausführungsform kann ein Boden des Staufachs von der Bodenmulde gebildet sein. Vorteilhaft kann der Bodeneinsatz damit auf besonders einfache Weise das Staufach bilden, zum Beispiel dadurch, dass der Bodeneinsatz eine umgedrehte Wannenform oder Schalenform aufweist.

In einer Ausführungsvariante ist eine Oberseite des Bodeneinsatzes und/oder eine Oberseite des Deckels, vorzugsweise rutschfest, profiliert, vorzugsweise mit Quer- und/oder Diagonalbahnen. Vorteilhaft kann der Bodeneinsatz damit zusätzlich zu seiner Funktion zum Erhöhen der Sitzposition eine Fahrsicherheit durch einen sicheren Stand der Schuhe auf dem Bodeneinsatz erhöhen.

In einer weiteren Ausführungsvariante ist der Bodeneinsatz zum Bilden einer innerhalb des Fahrerhauses angeordneten Innenstufe bezüglich einer fahrerseitigen Außenlängsseite des Fahrerhauses zurückversetzt. Alternativ oder zusätzlich weist das Fahrerhaus mindestens eine Außenstufe zum Einsteigen in das Fahrerhaus und zum Austeigen aus dem Fahrerhauses auf, wobei der Bodeneinsatz bezüglich einer Querachse des Fahrerhauses gegenüber der mindestens einen Außenstufe zurückversetzt ist (zum Beispiel hin zu dem erhabenen Motortunnelabschnitt). Vorteilhaft kann damit verhindert werden, dass von der höchsten Außenstufe aus ein sehr hoher Schritt in das Fahrerhaus hineingemacht werden muss, um das Fahrerhaus zu betreten. Zudem kann der Raum, der durch das Zurückversetzen des Bodeneinsatzes entsteht, durch die geschlossene Fahrertür gefüllt bzw. geschlossen werden. In anderen Worten, der zurückversetzte Bodeneinsatz kann einen Aufnahmeraum für eine Innenseite der Fahrertür schaffen. Zusätzlich kann der zurückversetzte Bodeneinsatz die Verwendung des Bodeneinsatzes im Fahrerhaus erleichtern, da der Bodeneinsatz somit räumlich getrennt zum äußeren Aufstieg mit den Außenstufen ist, sodass Anforderungen, die an die Außenstufen gestellt werden, vom Bodeneinsatz bzw. dessen Innenstufe nicht in gleicher Weise erfüllt werden müssen.

In einem Ausführungsbeispiel weist das Fahrerhaus ferner eine vordere Fahrerhauswand auf. Der Fahrerhausboden weist einen (zum Beispiel gegenüber der Bodenmulde) erhabenen Fahrersitztragabschnitt auf, auf dem der Fahrersitz montiert ist. Vorzugsweise kann der Bodeneinsatz zwischen der vorderen Fahrerhauswand und dem erhabenen Fahrersitztragabschnitt angeordnet sein.

Optional stützt der Bodeneinsatz die vordere Fahrerhauswand an dem erhabenen Fahrersitztragabschnitt ab, vorzugsweise derart, dass der Bodeneinsatz als eine Crashkonsole im Falle eines Frontalcrashs des Fahrerhauses (bzw. des Lastkraftwagens) wirkt. Vorteilhaft kann der Bodeneinsatz damit zusätzlich zu seiner Funktion zum Erhöhen der Sitzposition eine Crashsicherheit des Fahrerhauses verbessern.

In einem weiteren Ausführungsbeispiel weist das Fahrerhaus ferner eine Beifahrertür mit einem Sichtfenster, vorzugsweise Tiefsichtfenster, auf, wobei das Sichtfenster vorzugsweise in einer unteren Hälfte der Beifahrertür und/oder unterhalb eines oberen Sichtfensters der Beifahrertür angeordnet ist. Vorteilhaft kann damit die durch den Bodeneinsatz ermöglichte, erhöhte Sitzposition des Fahrers besonders geschickt dazu genutzt werden, dass der Fahrer schräg von oben durch das Sichtfenster der Beifahrertür gucken kann, um Verkehrsteilnehmer direkt neben der Beifahrerseite des Fahrerhauses zu erkennen.

In einem weiteren Ausführungsbeispiel weist der Fahrerhausboden eine weitere Bodenmulde auf einer Beifahrerseite des Fahrerhauses auf. Die weitere Bodenmulde ist frei von einem weiteren Bodeneinsatz zum Bilden eines Doppelbodens bzw. in der weiteren Bodenmulde ist kein weiterer Bodeneinsatz angeordnet. Vorteilhaft kann somit beispielsweise die direkte Sicht des Fahrers durch das Sichtfenster der Beifahrertür nochmals verbessert werden.

Ein weiterer Aspekt der vorliegenden Offenbarung betrifft einen Lastkraftwagen (zum Beispiel mit einem Aufbau oder ausgeführt als ein Sattelzugfahrzeug) aufweisend ein Fahrerhaus wie hierin offenbart. Vorteilhaft kann der Lastkraftwagen die gleichen Vorteile erzielen, die bereits unter Bezugnahme auf das Fahrerhaus beschrieben wurden.

Ein weiterer Aspekt der vorliegenden Offenbarung betrifft ein Verfahren zum Herstellen eines Fahrerhauses wie hierin offenbart. Das Verfahren weist ein Herstellen eines den Fahrerhausboden mit der Bodenmulde aufweisenden Fahrerhausrohbaus des Fahrerhauses auf. Das Verfahren weist ferner ein Anordnen des Bodeneinsatzes in der Bodenmulde des Fahrerhausbodens des hergestellten Fahrerhausrohbaus auf (z. B. aus miteinander gefügten Trägern und umgeformten Blechplatten). Das Verfahren weist ferner ein (zum Beispiel lösbares) Fügen des in der Bodenmulde angeordneten Bodeneinsatzes mit dem Fahrerhausboden, vorzugsweise mit der Bodenmulde, auf. Vorteilhaft ermöglicht das Herstellungsverfahren, dass der Bodeneinsatz auf einfache Weise bei der Fertigung des Fahrerhauses integriert werden kann, ohne dass hierfür die bestehende, aufwändige Fertigung des Fahrerhausrohbaus mit dem Fahrerhausboden angepasst werden muss. Auf diese Weise kann der Bodeneinsatz einfach in die Serienfertigung des Fahrerhauses integriert werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht einer Fahrerseite eines Fahrerhauses eines Lastkraftwagens gemäß einem Ausführungsbeispiel der vorliegenden Offenbarung;
- Figur 2: eine Seitenansicht einer Beifahrerseite des beispielhaften Fahrerhauses;
- Figur 3: eine Seitenansicht einer Fahrerseite des beispielhaften Fahrerhauses mit eingezeichneten Sichtlinien des Fahrers ohne Darstellung einer Fahrertür des Fahrer-hauses;
- Figur 4: eine perspektivische Ansicht eines Abschnitts eines Fahrerhausrohbaus des beispielhaften Fahrerhauses ohne Darstellung eines Bodeneinsatzes;
- Figur 5: eine perspektivische Ansicht eines Abschnitts eines Fahrerhausrohbaus des beispielhaften Fahrerhauses, wobei das Fahrerhaus einen Bodeneinsatz aufweist;
- Figur 6: eine perspektivische Ansicht eines Abschnitts eines Fahrerhausrohbaus des beispielhaften Fahrerhauses, wobei das Fahrerhaus einen geöffneten Bodeneinsatz aufweist;
- Figur 7: eine Seitenansicht einer Fahrerseite eines Abschnitts eines Fahrerhausrohbaus des beispielhaften Fahrerhauses, wobei das Fahrerhaus einen Bodeneinsatz aufweist;
- Figur 8: eine Seitenansicht einer Fahrerseite eines Abschnitts eines Fahrerhausrohbaus des beispielhaften Fahrerhauses ohne Darstellung eines Bodeneinsatzes; und
- Figur 9: eine schematische Querschnittansicht durch das beispielhafte Fahrerhaus mit dem Bodeneinsatz, wobei eine Positionierung eines Fahrers schematisch eingezeichnet ist.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

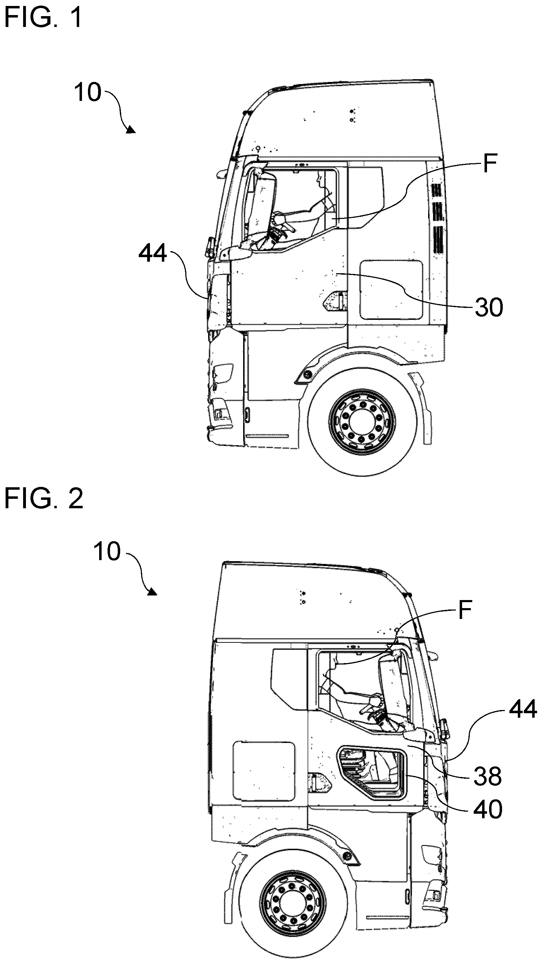

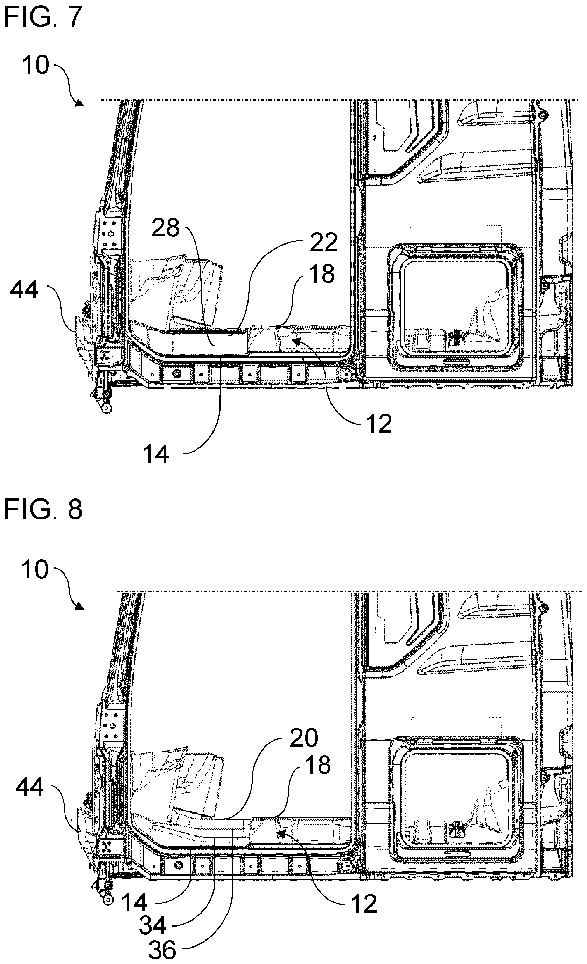

Die Figuren 1 bis 9 zeigen unterschiedliche Ansichten eine Fahrerkabine bzw. eines Fahrerhauses 10 eines Lastkraftwagens. Der Lastkraftwagen kann beispielsweise als ein Sattelzugfahrzeug oder als ein Lastkraftwagen mit Aufbau (zum Beispiel Ladeaufbau) ausgeführt sein.

Das Fahrerhaus 10 bzw. ein Rohbau des Fahrerhauses 10 weist einen Fahrerhausboden 12 mit einer Bodenmulde 14 auf. Der Fahrerhausboden 12 kann bevorzugt durch mindestens ein umgeformtes Blech gebildet sein. Der Fahrerhausboden 12 kann, vorzugweise gefedert, auf einem Fahrzeugrahmen des Lastkraftwagens abgestützt sein. Bevorzugt kann der Fahrzeugrahmen als ein Leiterrahmen mit zwei im Wesentlichen parallelen Hauptlängsträgern und mehreren, die beiden Hauptlängsträger verbindenden Querträgern ausgeführt sein.

Die Bodenmulde 14 ist in einer Vorwärtsfahrtrichtung des Lastkraftwagens vor einem Fahrersitz 16 angeordnet. Beispielsweise kann der Fahrerhausboden 12 einen erhabenen Fahrersitztragabschnitt 18 aufweisen. Der Fahrersitz 16 kann, vorzugsweise höhenverstellbar, auf dem Fahrersitztragabschnitt 18 abgestützt sein. Bevorzugt kann die Bodenmulde 14 in der Vorwärtsfahrtrichtung des Lastkraftwagens vor dem Fahrersitztragabschnitt 18 angeordnet sein. Bevorzugt ist die Bodenmulde 14 bezüglich einer Querachse des Fahrerhauses 10 direkt neben einem erhabenen Motortunnelabschnitt 20 angeordnet.

Bevorzugt kann die Bodenmulde 14 stufenförmig in den erhabenen Motortunnelabschnitt 20 und/oder stufenförmig in den erhabenen Fahrersitztragabschnitt 18 übergehen.

Unterhalb des erhabenen Motortunnelabschnitts 20 kann beispielsweise ein Antriebsmotor, zum Beispiel ein Elektromotor oder ein Verbrennungsmotor, angeordnet sein.

Die Bodenmulde 14 kann als eine Vertiefung in dem Fahrerhausboden 12 ausgeführt sein. Bevorzugt kann die Bodenmulde 14 eine im Wesentlichen ebene Bodenfläche aufweisen.

In der Bodenmulde 14 ist ein Bodeneinsatz 22 angeordnet, der die Bodenmulde 14 bevorzugt füllt. Vorzugsweise ist der Bodeneinsatz 22 in einer Vorwärtsfahrtrichtung des Lastkraftwagens vor dem Fahrersitz 16 angeordnet. Bevorzugt ist der Bodeneinsatz 22 nur in der Bodenmulde 14 angeordnet. Es ist allerdings beispielsweise auch möglich, dass sich der Bodeneinsatz 22 entgegen einer Vorwärtsfahrtrichtung des Lastkraftwagens heraus aus der Bodenmulde 14 bis über den Fahrersitztragabschnitt 18 erstreckt, zum Beispiel um eine Aufstandsfläche für den Fahrersitz 16 zu erhöhen.

Der Bodeneinsatz 22 ist mit dem Fahrerhausboden 12 gefügt. Beispielsweise kann der Bodeneinsatz 22 lösbar mit dem Fahrerhausboden 12 gefügt sein, zum Beispiel mittels mehrerer Schraubverbindungen. Alternativ kann der Bodeneinsatz 22 beispielsweise stoffschlüssig mit dem Fahrerhausboden 12 gefügt sein, zum Beispiel durch Verschweißen oder Verkleben mit dem Fahrerhausboden 12. Der Bodeneinsatz 22 ist mit dem Fahrerhausboden 12 bevorzugt derart gefügt, dass der Bodeneinsatz 22 den Fahrerhausboden 12 versteift, vorzugsweise bezüglich einer Längsachse und/oder einer Querachse des Fahrerhauses 10. Besonders bevorzugt kann der Bodeneinsatz 22 nachträglich in den Fahrerhausrohbau eingesetzt und darin mit dem Fahrerhausboden 12 gefügt werden.

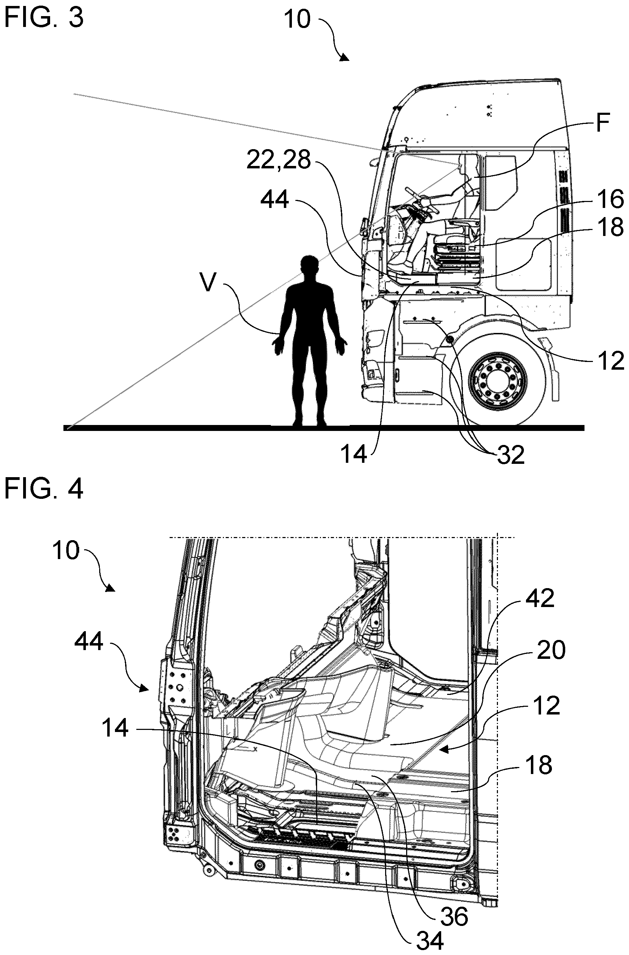

Der Bodeneinsatz 22 bildet zusammen mit der Bodenmulde 14 einen Doppelboden. Durch den Doppelboden kann eine Fußauflagefläche für einen auf dem Fahrersitz 16 sitzenden Fahrer F gegenüber einer Bodenfläche der Bodenmulde 14 vertikal nach oben versetzt werden. Die erhöhte Fußauflagefläche ermöglicht, dass der Fahrersitz 16 höher im Fahrerhaus eingebaut werden kann, ohne dass die Füße des Fahrers F den Boden nicht mehr erreichen können. Die erhöhte Fußauflagefläche bringt den Fahrer F zudem dazu, eine erhöhte Sitzposition mit dem Fahrersitz 16 einzunehmen. Die Figur 3 zeigt, dass die erhöhte Sitzposition des Fahrers F dazu führt, dass der Fahrer F in Blickrichtung nach vorne eine bessere Sicht haben kann. Diese bessere Sicht kann dazu führen, dass der Fahrer F andere Verkehrsteilnehmer V, die sehr nahe vor dem Fahrerhaus 10 positioniert sind, sehen kann, die er sonst bei niedrigerer Sitzposition nicht gesehen hätte.

Vorzugsweise kann der Bodeneinsatz 22 einen Höhenversatz zwischen der Bodenmulde 14 einerseits und dem erhabenen Motortunnelabschnitt 20 und/oder dem erhabenen Fahrersitztragabschnitt 18 andererseits ausgleichen. Bevorzugt kann der Bodeneinsatz 22 derart ausgeführt sein, dass eine Oberseite des Bodeneinsatzes 22 und eine Oberseite des erhabenen Motortunnelabschnitts 20 und/oder eine Oberseite des erhabenen Fahrersitztragabschnitt 18 im Wesentlichen auf gleicher Höhe angeordnet sind. Beispielsweise kann der Bodeneinsatz 22 eine Höhe aufweisen, die ≥ 50 mm, ≥ 70 mm ≥ 90 mm, ≤ 150 mm, ≤ 130 mm und/oder ≤ 110 mm ist. Bevorzugt kann der Bodeneinsatz 22 eine Höhe von rund 100 mm aufweisen.

Der Bodeneinsatz 22 kann als ein starrer Einsatz, zum Beispiel aus Blech, ausgeführt sein. Der Bodeneinsatz 22 kann im Wesentlichen boxförmig, kastenförmig, wannenförmig oder schalenförmig sein. Besonders bevorzugt ist der Bodeneinsatz 22 nach unten hin offen.

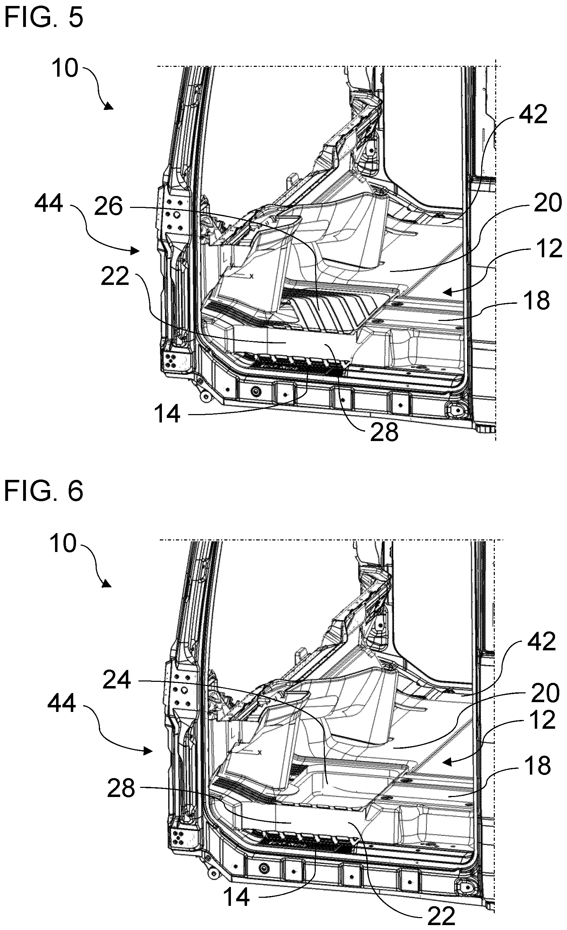

Der Bodeneinsatz 22 kann ein Staufach 24 aufweisen, wie beispielsweise in Figur 6 dargestellt ist. Das Staufach 24 kann für den Fahrer F zugänglich sein, vorzugsweise von oben. Das Staufach 24 kann beispielsweise mittels eines in Figur 5 beispielhaft dargestellten Deckels 26 zugänglich sein bzw. geöffnet werden. Der Deckel 26 kann bevorzugt an einer Oberseite des Bodeneinsatzes 22 angeordnet sein. Der Deckel 26 kann beispielsweise abnehmbar sein oder bewegbar, zum Beispiel verschwenkbar oder verschiebbar, mit dem Bodeneinsatz 22 verbunden sein. Ein Boden des Staufachs 24 kann bevorzugt von der Bodenmulde 14 gebildet sein. In dem Staufach 24 können beispielsweise Schuhe, Handschuhe, Behälter für Nahrungsmittel oder sonstige Utensilien verstaut werden. Eine Form des Deckels 26 kann beispielsweise rund oder rechteckig sein.

Bevorzugt kann eine Oberseite des Bodeneinsatzes 22 bzw. eine für den Fahrer F vorgesehene Fußaufstandsfläche des Bodeneinsatzes 22 profiliert sein und/oder im Wesentlichen in einer Horizontalebene ausgerichtet sein. Besonders bevorzugt ist eine Oberseite des Deckels 26 profiliert, wie beispielsweise in Figur 5 dargestellt ist. Die Profilierung kann beispielsweise mehrere, sich vorzugsweise parallel erstreckende Profilbahnen aufweisen. Die Profilbahn können sich bevorzugt weg von dem erhabenen Motortunnelabschnitt 20 und/oder in Richtung zu einer fahrerseitigen Außenlängsseite des Fahrerhauses 10 erstrecken, z. B. als Quer- oder Diagonalbahnen.

In den Figuren 5, 6 und 9 ist dargestellt, dass der Bodeneinsatz 22 zum Bilden einer innerhalb des Fahrerhauses 10 angeordneten Innenstufe 28 bezüglich einer fahrerseitigen Außenlängsseite des Fahrerhauses 10 zurückversetzt ist. Beispielsweise kann die Innenstufe 28 eine Höhe aufweisen, die ≥ 50 mm, ≥ 70 mm ≥ 90 mm, ≤ 150 mm, ≤ 130 mm und/oder ≤ 110 mm ist. Bevorzugt kann die Innenstufe 28 eine Höhe von rund 100 mm aufweisen.

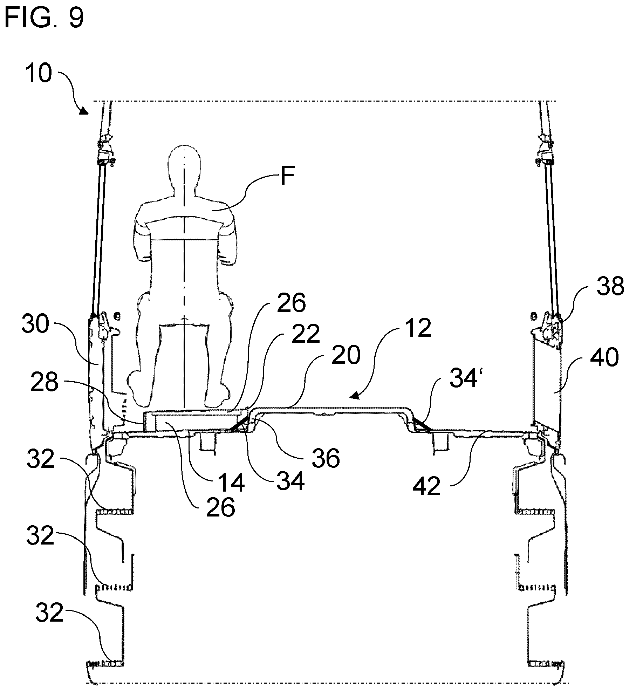

Beispielsweise kann der Bodeneinsatz 22 in einem Bereich zwischen 100 mm und 300 mm bezüglich der fahrerseitigen Außenlängsseite des Fahrerhauses 10 in Richtung einer Querachse des Fahrerhauses 10 zurückversetzt sein. Die Innenstufe 28 kann derart zurückversetzt sein, dass Platz zum Aufnehmen einer Innenseite einer Fahrertür 30 des Fahrerhauses 10 geschaffen wird, wie beispielsweise in Figur 9 dargestellt ist.

Besonders bevorzugt ist der Bodeneinsatz 22 in Richtung einer Querachse des Fahrerhauses 10 gegenüber mindestens einer Außenstufe 32 des Fahrerhauses 10 zurückversetzt, wie ebenfalls in Figur 9 dargestellt ist. Die mindestens eine Außenstufe 32 kann eine oder mehrere Außenstufen 32 umfassen. Die mindestens eine Außenstufe 32 dient dem Fahrer F zum Einsteigen in das Fahrerhaus 10 und zum Aussteigen aus dem Fahrerhaus 10.

Wie ebenfalls in Figur 9 ersichtlich ist, kann der Bodeneinsatz 22 an einem Übergang zwischen der Bodenmulde 14 und dem erhabenen Motortunnelabschnitt 20 einen Aufnahmeraum für eine Versteifungsstruktur 34 aufweisen. Die Bodenmulde 14 kann die Versteifungsstruktur 34 bevorzugt von oben abdecken. Die Versteifungsstruktur 34 kann auch in dem Bodeneinsatz 22 integriert sein. Die Versteifungsstruktur 34 kann einen im Wesentlichen vertikalen Wandabschnitt 36 eines stufenförmigen Übergangs zwischen der Bodenmulde 14 und dem erhabenen Motortunnelabschnitt 20 an einer Oberseite der Bodenmulde 14 abstützen.

Die Versteifungsstruktur 34 kann sich geneigt zwischen dem vertikalen Wandabschnitt 36 und der Bodenmulde 14 erstrecken. Bevorzugt kann die Versteifungsstruktur 34 geneigt an dem im Wesentlichen vertikalen Wandabschnitt 36 anliegen. Die Versteifungsstruktur 34 kann geneigt an der Bodenmulde 14 anliegen. Eine Längserstreckung der Versteifungsstruktur 34 kann bevorzugt im Wesentlichen parallel zu einer Längsachse des Fahrerhauses 10 verlaufen. Die Versteifungsstruktur 34 kann beispielsweise durch ein vorzugsweise gebogenes Blechteil oder einen Träger gebildet sein. Die Versteifungsstruktur 34 kann mit dem Fahrerhausboden 12 gefügt sein, zum Beispiel mittels Verschrauben, Verschweißen oder Verkleben.

Es ist möglich, dass auch auf einer Beifahrerseite des Fahrerhausbodens 12 eine Versteifungsstruktur 34' zum Abstützen eines im Wesentlichen vertikalen Wandabschnitts eines stufenförmigen Übergangs zu dem erhabenen Motortunnelabschnitt 20 aufweist, wie ebenfalls in Figur 9 dargestellt ist.

Besonders bevorzugt kann das Fahrerhaus 10 eine Beifahrertür 38 mit einem Sichtfenster 40, vorzugsweise Tiefsichtfenster, aufweisen, wie beispielsweise in den Figuren 2 und 9 dargestellt ist. Bevorzugt kann das Sichtfenster 40 in einer unteren Hälfte der Beifahrertür 38 und/oder unterhalb eines oberen Sichtfensters der Beifahrertür 38 angeordnet sein. Wie ferner genauer in Figur 9 dargestellt ist, kann der Fahrerhausboden 12 auf einer Beifahrerseite eine weitere Bodenmulde 42 aufweisen. Zum Verbessern einer Sicht eines auf dem Fahrersitz 16 sitzenden Fahrers F durch das Sichtfenster 40 kann in dieser weitere Bodenmulde 42 kein weiterer Bodeneinsatz zum Bilden eines Doppelbodens angeordnet sein.

Die weitere Bodenmulde 42 kann in einer Vorwärtsfahrtrichtung des Lastkraftwagens vor einem Beifahrersitz (nicht dargestellt) angeordnet sein. Beispielsweise kann der Fahrerhausboden 12 einen erhabenen Beifahrersitztragabschnitt (nicht dargestellt) aufweisen. Der Beifahrersitz kann, vorzugsweise höhenverstellbar, auf dem Beifahrersitztragabschnitt abgestützt sein. Bevorzugt kann die weitere Bodenmulde 42 in der Vorwärtsfahrtrichtung des Lastkraftwagens vor dem Beifahrersitztragabschnitt angeordnet sein. Bevorzugt ist die weitere Bodenmulde 42 bezüglich einer Querachse des Fahrerhauses 10 direkt neben dem erhabenen Motortunnelabschnitt 20 angeordnet, nämlich auf einer der Bodenmulde 14 entgegengesetzten Seite des Motortunnelabschnitts 20. Bevorzugt kann die weitere Bodenmulde 42 stufenförmig in den erhabenen Motortunnelabschnitt 20 und/oder stufenförmig in den erhabenen Beifahrersitztragabschnitt übergehen. Die weitere Bodenmulde 42 kann als eine Vertiefung in dem Fahrerhausboden 12 ausgeführt sein. Bevorzugt kann die weitere Bodenmulde 42 eine im Wesentlichen ebene Bodenfläche aufweisen.

Es ist möglich, dass der Bodeneinsatz 22 zusätzlich derart ausgeführt und angeordnet sein kann, dass er als eine Crashkonsole bzw. ein Crashelement wirken kann. Beispielsweise kann der Bodeneinsatz 22 zwischen einer Stirnwand bzw. vorderen Fahrerhauswand 44 und dem erhabenen Fahrersitztragabschnitt 18 des Fahrerhausboden 12 angeordnet sein. Der Bodeneinsatz 22 kann die vordere Fahrerhauswand 44 bezüglich einer Längsachse des Fahrerhauses 10 an dem erhabenen Fahrersitztragabschnitt 18, vorzugsweise einer vorderen Stufenwand des erhabenen Fahrersitztragabschnitts 18, abstützen. Im Falle eines Frontalcrashs können die Crashbelastungen dann über die vordere Fahrerhauswand und den Bodeneinsatz 22 in den erhabenen Fahrersitztragabschnitt 18 eingeleitet und abgestützt werden, sodass vorzugsweise ein Überlebensraumen für den Fahrer F gesichert wird.

In diesem Zusammenhang ist es ebenfalls möglich, dass der Bodeneinsatz 22 auch im Falle eines Seitencrashs als eine Crashkonsole bzw. ein Crashelement wirkt. Der Bodeneinsatz 22 kann die Fahrertür 30 im Falle eines Seitencrashs an dem erhabenen Motortunnelabschnitt 20 abstützen und so vorzugsweise einen Überlebensraumen für den Fahrer F sichern.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich eines Vorhandenseins und/oder einer Konfiguration des Fahrersitzes, des Fahrerhausbodens und/oder des Bodeneinsatzes des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Fahrerhaus
- 12: Fahrerhausboden
- 14: Bodenmulde
- 16: Fahrersitz
- 18: erhabener Fahrersitztragabschnitt
- 20: erhabener Motortunnelabschnitt
- 22: Bodeneinsatz
- 24: Staufach
- 26: Deckel
- 28: Innenstufe
- 30: Fahrertür
- 32: Außenstufe
- 34: Versteifungsstruktur
- 36: Wandabschnitt
- 38: Beifahrertür
- 40: Sichtfenster
- 42: weitere Bodenmulde
- 44: vordere Fahrerhauswand

- F: Fahrer
- V: Verkehrsteilnehmer

## Patentansprüche

1. Fahrerhaus (10) für einen Lastkraftwagen, aufweisend:
einen Fahrersitz (16);
einen Fahrerhausboden (12) mit einer Bodenmulde (14), die in einer Vorwärtsfahrtrichtung des Lastkraftwagens vor dem Fahrersitz (16) angeordnet ist; und
einen Bodeneinsatz (22), der in der Bodenmulde (14) angeordnet und mit dem Fahrerhausboden (12), vorzugsweise lösbar, gefügt ist, wobei der Bodeneinsatz (22) zusammen mit der Bodenmulde (14) einen Doppelboden zum Versetzen einer Fußauflagefläche für einen auf dem Fahrersitz (16) sitzenden Fahrer (F) vertikal nach oben bildet.

2. Fahrerhaus (10) nach Anspruch 1, wobei:
der Fahrerhausboden (12) einen erhabenen Motortunnelabschnitt (20) aufweist; und
die Bodenmulde (14) bezüglich einer Querachse des Fahrerhauses (10) neben dem erhabenen Motortunnelabschnitt (20) angeordnet ist, wobei vorzugsweise eine Oberseite des Bodeneinsatzes (22) und eine Oberseite des erhabenen Motortunnelabschnitts (20) im Wesentlichen auf gleicher Höhe angeordnet sind.

3. Fahrerhaus (10) nach Anspruch 2, wobei
der Fahrerhausboden (12) einen im Wesentlichen vertikalen Wandabschnitt (36), der unten in die Bodenmulde (14) und oben in den erhabenen Motortunnelabschnitt (20) übergeht, aufweist;
der Fahrerhausboden (12) eine Versteifungsstruktur (34) aufweist, die sich geneigt zwischen dem im Wesentlichen vertikalen Wandabschnitt (36) und der Bodenmulde (14) erstreckt und den im Wesentlichen vertikalen Wandabschnitt (36) zusätzlich an der Bodenmulde (14) abstützt; und
der Bodeneinsatz (22) zum Aufnehmen oder Abdecken der Versteifungsstruktur (34) ausgebildet ist.

4. Fahrerhaus (10) nach einem der vorherigen Ansprüche, wobei:
der Bodeneinsatz (22) eine Höhe aufweist, die
≥ 50 mm, ≥ 70 mm oder ≥ 90 mm; und/oder
≤ 150 mm, ≤ 130 mm oder ≤ 110 mm ist.

5. Fahrerhaus (10) nach einem der vorherigen Ansprüche, wobei mindestens eines der nachfolgenden Merkmale erfüllt ist:
der Bodeneinsatz (22) ist im Wesentlichen boxförmig, kastenförmig, wannenförmigen oder schalenförmig;
der Bodeneinsatz (22) ist unten offen;
der Bodeneinsatz (22) ist starr und/oder ist starr auf der Bodenmulde (14) abgestützt ist;
der Bodeneinsatz (22) ist derart mit dem Fahrerhausboden (12) gefügt, dass der Bodeneinsatz (22) den Fahrerhausboden (12) versteift, vorzugsweise bezüglich einer Längsachse und/oder einer Querachse des Fahrerhauses (10).

6. Fahrerhaus (10) nach einem der vorherigen Ansprüche, wobei:
der Bodeneinsatz (22) nur innerhalb der Bodenmulde (14) angeordnet ist; und/oder
der Bodeneinsatz (22) zum Füllen der Bodenmulde (14) in der Bodenmulde (14) angeordnet ist.

7. Fahrerhaus (10) nach einem der vorherigen Ansprüche, wobei:
der Bodeneinsatz (22) ein Staufach (24) aufweist.

8. Fahrerhaus (10) nach Anspruch 7, wobei:
der Bodeneinsatz (22) einen, vorzugsweise oberseitigen, Deckel (26) aufweist, über den das Staufach (24) zugänglich ist; und/oder
ein Boden des Staufachs (24) von der Bodenmulde (14) gebildet ist.

9. Fahrerhaus (10) nach einem der vorherigen Ansprüche, wobei:
eine Oberseite des Bodeneinsatzes (22), vorzugsweise rutschfest, profiliert ist, vorzugsweise mit Quer- und/oder Diagonalbahnen.

10. Fahrerhaus (10) nach einem der vorherigen Ansprüche, wobei:
der Bodeneinsatz (22) zum Bilden einer innerhalb des Fahrerhauses (10) angeordneten Innenstufe (28) bezüglich einer fahrerseitigen Außenlängsseite des Fahrerhauses (10) zurückversetzt ist; und/oder
das Fahrerhaus (10) mindestens eine Außenstufe (32) zum Einsteigen in das Fahrerhaus (10) und zum Austeigen aus dem Fahrerhauses (10) aufweist, wobei der Bodeneinsatz (22) bezüglich einer Querachse des Fahrerhauses (10) gegenüber der mindestens einen Außenstufe (32) zurückversetzt ist.

11. Fahrerhaus (10) nach einem der vorherigen Ansprüche, ferner aufweisend:
eine vordere Fahrerhauswand (44),
wobei:
der Fahrerhausboden (12) einen erhabenen Fahrersitztragabschnitt (18) aufweist, auf dem der Fahrersitz (16) montiert ist;
der Bodeneinsatz (22) zwischen der vorderen Fahrerhauswand (44) und dem erhabenen Fahrersitztragabschnitt (18) angeordnet ist; und
der Bodeneinsatz (22) die vordere Fahrerhauswand (44) an dem erhabenen Fahrersitztragabschnitt (18) abstützt, vorzugsweise derart, dass der Bodeneinsatz (22) als eine Crashkonsole im Falle eines Frontalcrashs des Fahrerhauses (10) wirkt.

12. Fahrerhaus (10) nach einem der vorherigen Ansprüche, ferner aufweisend:
eine Beifahrertür (38) mit einem Sichtfenster (40), vorzugsweise Tiefsichtfenster, wobei das Sichtfenster (40) in einer unteren Hälfte der Beifahrertür (38) und/oder unterhalb eines oberen Sichtfensters der Beifahrertür (38) angeordnet ist.

13. Fahrerhaus (10) nach einem der vorherigen Ansprüche, wobei:
der Fahrerhausboden (12) eine weitere Bodenmulde (42) auf einer Beifahrerseite des Fahrerhauses (10) aufweist, und
die weitere Bodenmulde (42) frei von einem weiteren Bodeneinsatz zum Bilden eines Doppelbodens ist.

14. Lastkraftwagen aufweisend:
ein Fahrerhaus (10) nach einem der vorherigen Ansprüche.

15. Verfahren zum Herstellen eines Fahrerhauses (10) nach einem der vorherigen Ansprüche, aufweisend:
Herstellen eines den Fahrerhausboden (12) mit der Bodenmulde (14) aufweisenden Fahrerhausrohbaus des Fahrerhauses (10);
Anordnen des Bodeneinsatzes (22) in der Bodenmulde (14) des Fahrerhausbodens (12) des hergestellten Fahrerhausrohbaus; und
Fügen des in der Bodenmulde (14) angeordneten Bodeneinsatzes (22) mit dem Fahrerhausboden (12), vorzugsweise mit der Bodenmulde (14).
